# EUROPEAN PATENT APPLICATION

(11) **EP 1 640 072 A1**
(43) Date of publication of application: **29.03.2006**
(21) Application number: 04745942.5
(22) Date of filing: 09.06.2004
(51) Int. Cl.: B03C 3/36

(54) **ROADSIDE DUST-COLLECTING APPARATUS**

(30) Priority: 12.06.2003 JP 2003167235
(71) Applicant: Matsushita Ecology Systems Co., Ltd., Kasugai, Aichi 486-8522 (JP); Environmental Restoration and Conservation Agengy, X (JP); Japan Quality Assurance Organization, Tokyo 100-8308 (JP)
(72) Inventor: KATATANI, Atsushi, Kaasugai-shi, Aichi 486-0918 (JP); HOSONO, Hiroshi, Naka-ku, Nagoya-shi, Aichi 460-0007 (JP); MURATA, Hikaru, Kasugai-shi, Aichi 487-0035 (JP); KURIYAMA, Toshikatsu, Env. Rest. + Cons. Agency, Kawasaki-shi, Kanagawa 212-8554 (JP); ENDO, Yoichi, c/o Japan Quality Assurance Organ., Tokyo 100-8308 (JP); MIZUNO, Akira, Nagoya-shi, Aichi 460-0022 (JP)
(74) Representative: Körfer, Thomas
(86) International application number: PCT/JP2004/008390
(87) International publication number: WO 2004/110636

(57) **Abstract**

A roadside dust collecting apparatus in which electricity is discharged between a discharger and a grounding portion, particulate matter in air is charged, thereby allowing the particulate matter to adhere to a dust collecting portion, wherein the roadside dust collecting apparatus includes a front surface plate and a rear surface plate as the dust collecting portion, the front surface plate and the rear surface plate are disposed at an established interval from each other, air which flowed into a front space of the rear surface plate from side of the front surface plate by natural wind or running wind of a vehicle is introduced into a rear space of the front surface plate by the rear surface plate and then, the air in the rear space is allowed to flow out from a side of the rear surface plate.

## Description

### Technical Field

The present invention relates to a roadside dust collecting apparatus for introducing, to a dust collecting portion, contaminant discharged from a vehicle by natural wind or running wind of the vehicle without forcibly blowing air using a blower.

### Background Technique

Around a highway or a roadside, air pollution caused by harmful gas and particulate matter (PM) discharged from automobiles (mainly diesel vehicles such as large trucks) has become a problem.

To suppress the contaminant concentration, it is most effective to suppress the automobiles which are generating sources. Emission control becomes strict more and more year after year, and there still exist not a few regions where contaminant concentration exceeds environmental criteria.

To eliminate NOx which is harmful gas, there is conventionally proposed an apparatus using a photocatalyst (e.g., patent documents 1 and 2).

There are proposed a large number of apparatuses for adhering particulate matter or NOx which is harmful gas using a filter. Among them, an apparatus which does not forcibly blow air using a blower is included (e.g., patent documents 3 and 4).

There are soil denitrating apparatuses which are disposed in some areas experimentally, and a simple soil denitrating apparatus is also proposed (e.g., patent document 5).

There is also proposed an apparatus for adhering particulate matter using static electricity (e.g., patent document 6 and 7).

### (Patent Document 1)

Japanese Patent Application Laid-open No.2000-273829

### (Patent Document 2)

Japanese Patent Application Laid-open No.2001-46836

### (Patent Document 3)

Japanese Patent Application Laid-open No.H9-38461

### (Patent Document 4)

Japanese Patent Application Laid-open No.2002-326014

### (Patent Document 5)

Japanese Patent Application Laid-open No.H7-299325

### (Patent Document 6)

Japanese Patent Application Laid-open No.2002-47627

### (Patent Document 7)

Japanese Patent Application Laid-open No.2002-69943

The apparatus utilizing photocatalyst as proposed in patent documents 1 and 2 utilizes sunlight as an energy source and thus, the apparatus exhibits its effect when it is disposed outdoor, but its removing ability is not high. In order to obtain predetermined stable ability practically, there is a problem that impractical contact area is required.

According to the apparatus using a filter as proposed in the patent documents 3 and 4, in order to enhance the adhering ability, ventilation resistance (pressure drop) is increased, and to utilize natural wind or wind generated by running of a vehicle, ventilation resistance (pressure drop) must be reduced, and adhering ability of filter is deteriorated.

The soil denitrating apparatus requires extensive land, and even with a simple soil denitrating apparatus as proposed in the patent document 5 requires a blower for forcibly blowing air.

The apparatus utilizing the static electricity as proposed in the patent documents 6 and 7 utilize natural wind or wind generated by running of a vehicle, but since electrification panels are utilized or pellets are stuffed, ventilation resistance (pressure drop) is high, and high adhering effect can not be expected.

Hence, it is an object of the present invention to provide a roadside dust collecting apparatus for efficiently removing contaminant discharged from a vehicle utilizing natural wind or running wind of a vehicle without forcibly blowing air using a blower.

### Disclosure of the Invention

A first aspect of the present invention provides a roadside dust collecting apparatus in which electricity is discharged between a discharger and a grounding portion, particulate matter in air is charged, thereby allowing the particulate matter to adhere to a dust collecting portion, wherein the roadside dust collecting apparatus includes a front surface plate and a rear surface plate as the dust collecting portion, the front surface plate and the rear surface plate are disposed at an established interval from each other, air which flowed into a front space of the rear surface plate from side of the front surface plate by natural wind or running wind of a vehicle is introduced into a rear space of the front surface plate by the rear surface plate and then, the air in the rear space is allowed to flow out from a side of the rear surface plate.

With this aspect, air which flowed in from the front surface plate can flow out from the front space of the rear surface plate through the rear space of the front surface plate from the rear surface plate, and contact and adhering probability of particulate matter to the front surface plate or rear surface plate as the dust collecting portion can be enhanced.

According to a second aspect of the invention, in the roadside dust collecting apparatus of the first aspect, a side surface plate for dividing the front space and the rear space from each other is provided as the dust collecting portion, at least a portion of the side surface plate is provided with a large number of holes.

With this aspect, when air passes through the rear surface plate of the front surface plate from the front space of the rear surface plate, dust can efficiently be collected by the side surface plate.

According to a third aspect of the invention, in the roadside dust collecting apparatus of the first aspect, the discharger is provided in the front space or the rear space, the front surface plate or the rear surface plate is the grounding portion.

With this aspect, if the front space or the rear space is used as a discharge space, the staying time of the particulate matter in the air in the discharge space can be increased, and the particulate matter can effectively be charged.

According to a fourth aspect of the invention, in the roadside dust collecting apparatus of the second aspect, the front surface plate and the side surface plate, or the rear surface plate and the side surface plate are the grounding portions.

With this aspect, by using not only the side surface plate but also the front surface plate or the rear surface plate as the grounding portion, it is possible to further enhance the charging effect of particulate matter.

According to a fifth aspect of the invention, in the roadside dust collecting apparatus of the second aspect, a width of the side surface plate is 0.3 to 3 times of a width of the front surface plate or the rear surface plate.

With this aspect, larger discharging space can be secured.

According to a sixth aspect of the invention, in the roadside dust collecting apparatus of the first aspect, there exist two or more front surface plates and two or more rear surface plates, the front spaces and the rear spaces are disposed alternately.

With this aspect, it is possible to obtain uniform dust collecting effect along a roadway.

According to a seventh aspect of the invention, in the roadside dust collecting apparatus of the first aspect, a portion of an air inflow surface of the front space is provided with a shielding member for air current.

With this aspect, by providing the shielding member, it is possible to give turbulent flow effect to the flow of air which flows into the front space, and it is possible to enhance the charging effect to the particulate matter and dust collecting effect of the particulate matter. When the end of the discharger is provided with an insulating portion, it is possible to prevent air from passing through the insulating portion having no charging effect, and the charging effect to the particulate matter can be enhanced.

According to an eighth aspect of the invention, in the roadside dust collecting apparatus of the first aspect, water is allowed to flow through the front surface plate or the rear surface plate.

With this aspect, the front surface plate or the rear surface plate can be cleaned by the flowing water. If water is allowed to flow continuously, of component dissolved by discharge, water-soluble component can be collected by water, and it is possible to effectively collect harmful material.

According to a ninth aspect of the invention, in the roadside dust collecting apparatus of the second aspect, water is allowed to flow through the side surface plate.

With this aspect, the side surface plate can be cleaned by the flowing water. If water is allowed to flow continuously, of component dissolved by discharge, water-soluble component can be collected by water, and it is possible to effectively collect harmful material.

According to a tenth aspect of the invention, in the roadside dust collecting apparatus of the eighth aspect, the roadside dust collecting apparatus is provided at its bottom with a water receiver, water in the water receiver is allowed to flow through the front surface plate or the rear surface plate.

With this aspect, water to be allowed to flow is circulated and thus, it is possible to reduce the supply of water from outside.

According to an eleventh aspect of the invention, in the roadside dust collecting apparatus of the ninth aspect, the roadside dust collecting apparatus is provided at its bottom with a water receiver, water in the water receiver is allowed to flow through the side surface plate.

With this aspect, water to be allowed to flow is circulated and thus, it is possible to reduce the supply of water from outside.

A twelfth aspect of the invention provides a roadside dust collecting apparatus wherein the roadside dust collecting apparatus includes a front surface plate and a rear surface plate as the dust collecting portion, the front surface plate and the rear surface plate are disposed at an established interval from each other, air which flowed into a front space of the rear surface plate from side of the front surface plate by natural wind or running wind of a vehicle is introduced into a rear space of the front surface plate by the rear surface plate and then, the air in the rear space is allowed to flow out from a large number of holes provided in the rear surface plate.

With this aspect, air which flowed in from the front surface plate can flow out from the front space of the rear surface plate through the rear space of the front surface plate from the rear surface plate using natural wind or running wind of a vehicle, and contact and adhering probability of particulate matter to the front surface plate or rear surface plate as the dust collecting portion can be enhanced.

A thirteenth aspect of the invention provides a roadside dust collecting apparatus wherein a rear surface plate and a plurality of side surface plates are provided as the dust collecting portion, the side surface plates are disposed, the discharger is disposed between the side surface plates, air is introduced between the rear surface plate and the side surface plate by natural wind or running wind of a vehicle.

With this aspect, contact and adhering probability of particulate matter to the front surface plate or rear surface plate as the dust collecting portion can be enhanced by introducing air between the rear surface plate and the side surface plate using natural wind or running wind of a vehicle.

According to a fourteenth aspect of the invention, in the roadside dust collecting apparatus of the twelfth or thirteenth aspect, at least a portion of the side surface plate and at least a portion of the rear surface plate are provided with a large number of holes.

With this aspect, air can flow through the side surface plate or rear surface plate and thus, particulate matter can be brought close to the side surface plate, and dust can be collected efficiently.

According to a fifteenth aspect of the invention, in the roadside dust collecting apparatus of the first to twelfth aspect, at least a portion of the front surface plate and at least a portion of the rear surface plate are provided with a large number of holes.

With this aspect, air can flow through the portion of the front surface plate and the portion of the rear surface plate and thus, particulate matter can be brought close to the front surface plate or the rear surface plate, and dust can be collected efficiently.

According to a sixteenth aspect of the invention, in the roadside dust collecting apparatus of the first to thirteenth aspect, the roadside dust collecting apparatus is disposed between a roadway and a sidewalk such that the rear surface plate comes on the side of the sidewalk.

With this aspect, air can be cleaned on the side of the sidewalk by removing particulate matter generated on the side of the roadway.

According to a seventeenth aspect of the invention, in the roadside dust collecting apparatus of the first to thirteenth aspect, the roadside dust collecting apparatus is disposed in a tunnel such that the rear surface plate comes on the side of a wall surface of the tunnel.

With this aspect, particulate matter generated in the tunnel can be removed without forcibly blowing air using a blower and thus, the roadside dust collecting apparatus can be disposed in a tunnel having a small cross section.

### Brief Description of the Drawings

Fig. 1 is a perspective view of an essential portion of a roadside dust collecting apparatus according to an embodiment of the present invention;
Fig. 2 is a perspective view of the essential portion of the roadside dust collecting apparatus;
Fig. 3 is a plan view of an essential portion showing an air flow of the roadside dust collecting apparatus;
Fig. 4 is a perspective view of an essential portion of a roadside dust collecting apparatus according to another embodiment of the invention;
Fig. 5 is a plan view of the essential portion of the roadside dust collecting apparatus;
Fig. 6 is a plan view of the essential portion of a roadside dust collecting apparatus according to another embodiment of the invention;
Fig. 7 is a plan view of the essential portion of the roadside dust collecting apparatus;
Fig. 8 is a plan view of the essential portion of a roadside dust collecting apparatus according to another embodiment of the invention;
Fig. 9 is a plan view of the essential portion of a roadside dust collecting apparatus according to another embodiment of the invention;
Fig. 10 is a plan view of the essential portion of the roadside dust collecting apparatus;
Fig. 11 is a plan view of the essential portion of a roadside dust collecting apparatus according to another embodiment of the invention;
Fig. 12 is a perspective view of the essential portion showing a using state of the roadside dust collecting apparatus shown in Fig. 11;
Fig. 13 is a sectional view in a tunnel showing a using state of the roadside dust collecting apparatus shown in Fig. 11;
Fig. 14 is a plan view of the essential portion of a roadside dust collecting apparatus according to another embodiment of the invention;
Fig. 15 is a perspective view of the essential portion of the roadside dust collecting apparatus;
Fig. 16 is a plan view of the essential portion of a roadside dust collecting apparatus according to another embodiment of the invention;
Fig. 17 is a perspective view of the essential portion of the roadside dust collecting apparatus;
Fig. 18 is a plan view of the essential portion of a roadside dust collecting apparatus according to another embodiment of the invention;
Fig. 19 is a plan view of the essential portion of a roadside dust collecting apparatus according to another embodiment of the invention;
Fig. 20 is a plan view of the essential portion of the roadside dust collecting apparatus;
Fig. 21 is a plan view of an essential portion of a roadside dust collecting apparatus according to another embodiment of the invention;
Fig. 22 is a plan view of an essential portion of a roadside dust collecting apparatus according to another embodiment of the invention; and
Fig. 23 is a plan view of an essential portion of a roadside dust collecting apparatus according to another embodiment of the invention.

### Best Mode for Carrying Out the Invention

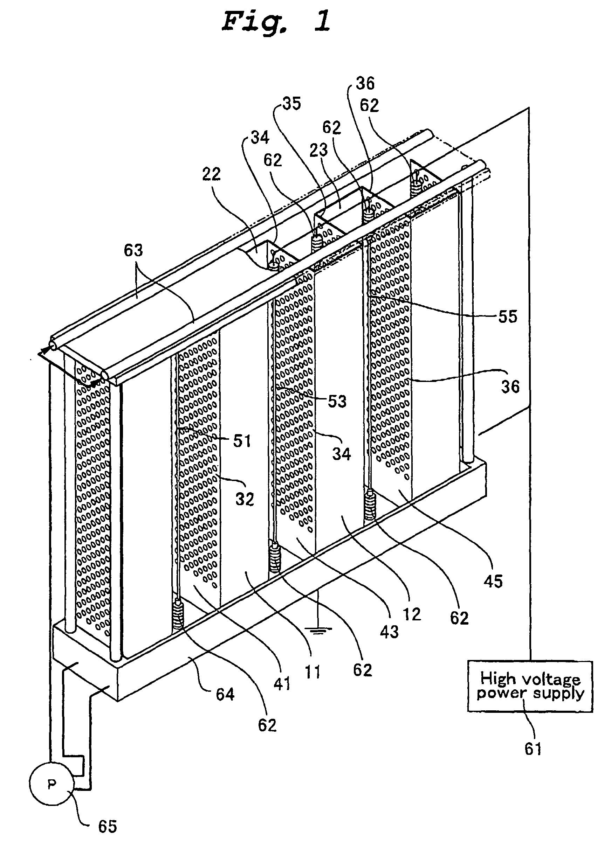

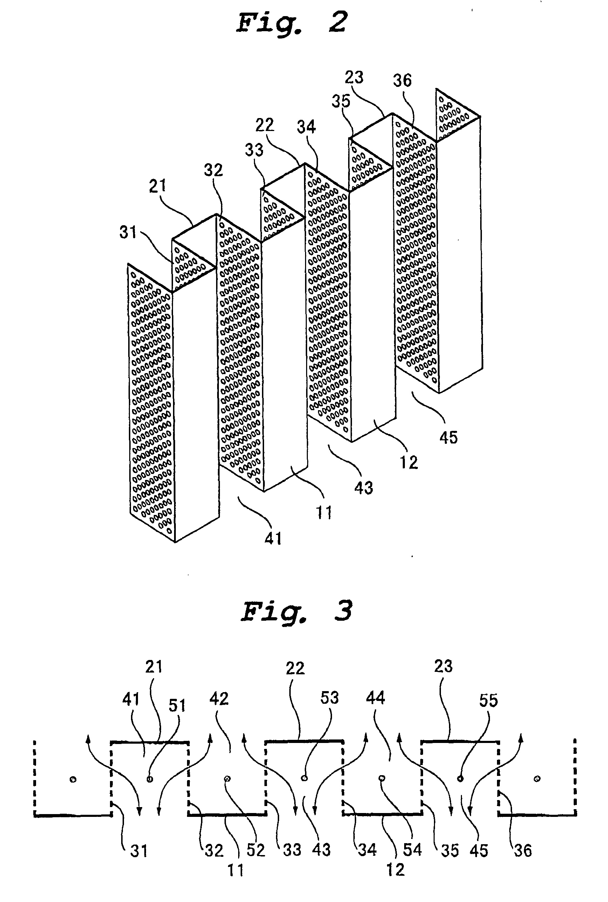

A roadside dust collecting apparatus according to an embodiment of the present invention will be explained with reference to the drawings. Fig. 1 is a perspective view of an essential portion of a roadside dust collecting apparatus according to an embodiment of the present invention. Fig. 2 is a perspective view of the essential portion of the roadside dust collecting apparatus. Fig. 3 is a plan view of an essential portion showing an air flow of the roadside dust collecting apparatus.

The roadside dust collecting apparatus of the embodiment is provided at its one of surfaces with a plurality of front surface plates 11 and 12 disposed at established intervals, and at the other surface with a plurality of rear surface plates 21, 22 and 23 at established intervals. The front surface plates 11 and 12 and the rear surface plates 21, 22 and 23 are disposed at established intervals. The front surface plate 11 is located between the rear surface plate 21 and the rear surface plate 22. The front surface plate 12 is located between the rear surface plate 22 and the rear surface plate 23. The side surface plates 31, 32, 33, 34, 35 and 36 are provided in a direction perpendicular to the front surface plates 11 and 12 and the rear surface plates 21, 22 and 23. One end of the rear surface plate 21 and one end of the front surface plate 11 are connected to each other through the side surface plate 32, the other end of the front surface plate 11 and one end of the rear surface plate 22 are connected to each other through the side surface plate 33, one end of the rear surface plate 22 and one end of the front surface plate 12 are connected to each other through the side surface plate 34, and the other end of the front surface plate 12 and one end of the rear surface plate 23 are connected to each other through the side surface plate 35. The side surface plates 31, 32, 33, 34, 35 and 36 are punching plates having a large number of holes or meshes. An opening rate of each of the side surface plates 31, 32, 33, 34, 35 and 36 is about 40%, and a preferable opening rate is 30 to 50%. It is preferable that the front surface plates 11 and 12, and the rear surface plates 21, 22 and 23, and the side surface plates 31, 32, 33, 34, 35 and 36 have the same widths in a range of 50mm to 100mm. It is preferable that the widths of the side surface plates 31, 32, 33, 34, 35 and 36 are in a range of 0.3 to 3 times of the widths of the front surface plates 11 and 12 or rear surface plates 21, 22 and 23.

A space surrounded by the rear surface plate 21, the side surface plate 31 and the side surface plate 32 is a front space 41 of the rear surface plate 21. A space surrounded by the front surface plate 11, the side surface plate 32 and the side surface plate 33 is a rear space 42 of the front surface plate 11. A space surrounded by the rear surface plate 22, the side surface plate 33 and the side surface plate 34 is a front space 43 of the rear surface plate 22. A space surrounded by the front surface plate 12, the side surface plate 34 and the side surface plate 35 is a rear space 44 of the front surface plate 12. A space surrounded by the rear surface plate 23, the side surface plate 35 and the side surface plate 36 is a front space 45 of the rear surface plate 23.

As shown in the drawing, air inflow surfaces of the front spaces 41, 43 and 45 of the rear surface plates 21, 22 and 23 are opened from one surface on which the front surface plates 11 and 12 are disposed. Air outflow surfaces of the rear spaces 42 and 44 of the front surface plates 11 and 12 are opened from the other surface on which the rear surface plates 21, 22 and 23 are disposed.

The front space 41 is provided with a discharge line 51, the rear space 42 is provided with a discharge line 52, the front space 43 is provided with a discharge line 53, the rear space 44 is provided with a discharge line 54 and the front space 45 is provided with a discharge line 55. For example, the discharge line 51 is disposed at a location equally away from the side surface plates 31 and 32 and the rear surface plate 21. The same can be applied to the other discharge lines 52, 53, 54 and 55. The discharge lines 51, 52, 53, 54 and 55 are made of tungsten, and connected to a high voltage power supply 61. Upper and lower ends of each of the discharge lines 51, 52, 53, 54 and 55 are provided with insulators 62.

Although tungsten wires can be used as the discharge lines 51, 52, 53, 54 and 55, coil springs or wire brushes may be used as discharge portions instead of the discharge lines 51, 52, 53, 54 and 55. A plurality of ring-like outer teeth washers or cylindrical insert nuts may be connected to one another coaxially with the thorn electrodes as the discharge portions. Alternatively, thorn electrodes whose opposite sides are of sawtooth shape may be used as the discharge portions.

The front surface plates 11 and 12, the rear surface plates 21, 22 and 23 and eh side surface plates 31, 32, 33, 34, 35 and 36 are ground electrodes and also function as dust collecting surfaces.

The apparatus body is provided at its upper portion with a water supply pipe 63 and at its bottom with a water receiver 64. The water supply pipe 63 supplies water to surfaces of the front surface plates 11 and 12 on the side of the discharge lines 52 and 54, and to surfaces of the rear surface plates 21, 22 and 23 on the side of the discharge lines 51, 53 and 55. It is preferable that the water supply pipe 63 also supplies water to both surfaces of the side surface plates 31, 32, 33, 34, 35 and 36. When a periodical or predetermined stain is detected, the water supply pipe 63 is used for cleaning. The water supply pipe 63 may continuously supply water. By continuously supplying water in this manner, water-soluble component of component resolved by discharging can be collected as water.

Water accumulated in the water receiver 64 is again supplied to the water supply pipe 63 by a pump 65.

Next, a dust collecting operation of the roadside dust collecting apparatus of the embodiment will be explained.

For example, air flowing into the front space 43 from sides of the front surface plate 11 and the front surface plate 12 changes its flow in the widthwise direction by the rear surface plate 22, passes through punching holes of the side surface plate 33 and the side surface plate 34, and flows into the rear space 42 and the rear space 44. Air flowing into the rear space 42 and the rear space 44 flows out from the side of the rear surface plate 22. Particulate matter flowing into the front space 43 together with air is charged by discharge of the discharge line 53, and when air passes through the punching hole, the particulate matter adheres to the side surface plate 33 and the side surface plate 34. Particulate matter which flows into the front space 43 and is charged adheres also to the rear surface plate 22. Particulate matter which passes through the punching hole and flows into the rear space 42 or rear space 44 is charged by discharge line 52 in the case of the rear space 42 and charged by the discharge line 54 in the case of the rear space 44, and adheres to the side surface plates 32 and 33 and the front surface plate 11 which form the rear space 42, and the side surface plates 34 and 35 and the front surface plate 12 which form the rear space 44.

As described above, the flowing direction of the air which enters into the front space 43 from the side of the front surface plate 11 is changed by the rear surface plate 22. Air which passes through the side surface plate 33 from the front space 43 and air which passes through the side surface plate 32 from the front space 41 collide against the rear space 42 and generate turbulent flow. Therefore, particulate matter in the air is prone to be charged, and easily adheres to the side surface plates 32 and 33, and high dust collecting effect can be obtained.

Although air flows from the sides of the front surface plate 11 and 12 in the above explanation, the same effect can be obtained even if air flows from the sides of the rear surface plates 21, 22 and 23.

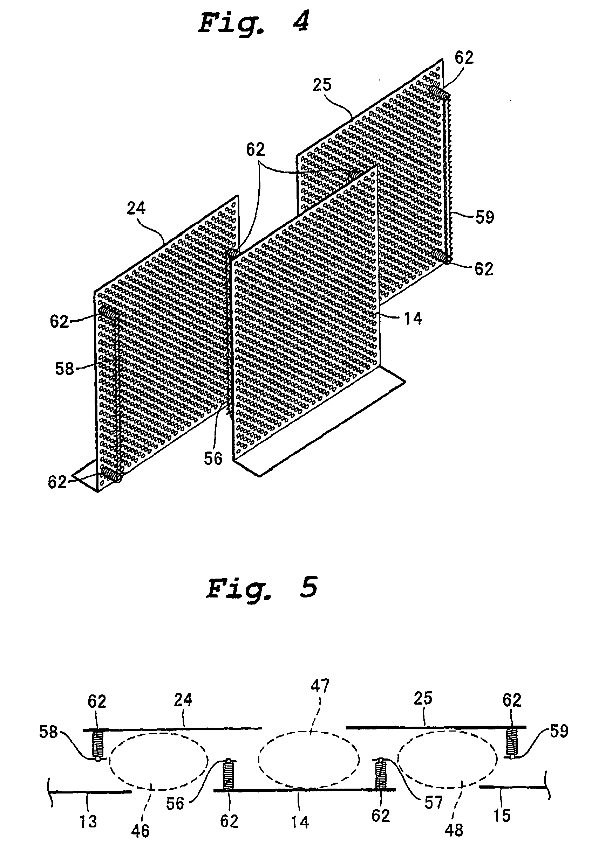

Next, a roadside dust collecting apparatus of another embodiment will be explained with reference to Figs. 4 and 5. Fig. 4 is a perspective view of an essential portion of a roadside dust collecting apparatus according to another embodiment of the invention. Fig. 5 is a plan view of the essential portion of the roadside dust collecting apparatus.

The roadside dust collecting apparatus of this embodiment is provided at its one of surfaces with a plurality of front surface plates 13, 14 and 15 at established intervals, and at its other surface with a plurality of rear surface plates 24 and 25 at a established interval. The front surface plates 13, 14 and 15 and the rear surface plates 24 and 25 are disposed at established intervals. The front surface plate 14 is disposed between the rear surface plate 24 and the rear surface plate 25 such that their ends are superposed to each other. The side surface plates 13, 14 and 15 and the rear surface plates 24 and 25 are punching plates having a large number of holes or meshes. An opening rate of each of the front surface plates 13, 14 and 15 and the rear surface plates 24 and 25 is about 40%, and a preferable opening rate is 30 to 50%. It is preferable that the front surface plates 13, 14 and 15, and the rear surface plates 24 and 25 have the same widths. Although only portions of the front surface plates 13, 14 and 15 and the rear surface plates 24 and 25 are illustrated in the drawing, the necessary number of front surface plates and rear surface plates are disposed in the widthwise direction.

A front space 46 is formed on the side of the front surface plates 13 and 14 of the rear surface plate 25. A rear space 47 is formed on the side of the rear surface plates 24 and 25 of the front surface plate 14. A front space 48 is formed on the side of the front surface plates 14 and 15 of the rear surface plate 25.

As shown in the drawing, air inflow surfaces of the front spaces 46 and 48 of the rear surface plates 24 and 25 are opened from the one surface on which the front surface plates 13, 14 and 15 are disposed. Air outflow surface of the rear space 47 of the front surface plate 14 is opened from the other surface on which the rear surface plates 24 and 25 are disposed.

Thorn electrodes 56 and 57 whose opposite sides are of sawtooth shape are provided on a surface of the front surface plate 14 on the side of the rear surface plates 24 and 25. A thorn electrode 58 is provided on a surface of a side of the rear surface plate 24 on the side of the front surface plate 13, and a thorn electrode 59 is provided on a surface of the side of the rear surface plate 25 on the side of the front surface plate 15. The thorn electrodes 56, 57, 58 and 59 are connected to a high voltage power supply (not shown). Upper and lower ends of the thorn electrodes 56, 57, 58 and 59 are provided with insulators 62.

Tungsten wires, coil springs or wire brushes may be used as discharge portions instead of the thorn electrodes 56, 57, 58 and 59. A plurality of ring-like outer teeth washers or cylindrical insert nuts may be connected to one another coaxially with the thorn electrodes as the discharge portions.

The front surface plates 13, 14 and 15 and the rear surface plates 24 and 25 are ground electrodes, and also functions as dust collecting surfaces. It is preferable that the thorn electrodes 56, 57, 58 and 59 are disposed on an intermediate surface between a plane determined by the front surface plates 13, 14 and 15 and a plane determined by the rear surface plates 24 and 25.

It is preferable that only opposite ends of the front surface plates 13, 14 and 15 opposed to the thorn electrodes 56, 57, 58 and 59 are provided with a large number of holes, and central portions thereof are closed. It is preferable that only opposite ends of the rear surface plates 24 and 25 opposed to the thorn electrodes 56, 57, 58 and 59 are provided with a large number of holes, and central portions thereof are closed. The front surface plates 13, 14 and 15 and the rear surface plates 24 and 25 may be plates having no holes.

In this embodiment also, it is preferable that the apparatus body is provided at its upper portion with a water supply pipe and at its bottom with a water receiver like the previous embodiment.

Nest, the dust collecting operation of the roadside dust collecting apparatus of the embodiment will be explained.

For example, the flowing direction of most of air flowing into the front space 46 from a side of the front surface plate 14 by natural wind or running wind of a vehicle is changed into the widthwise direction by the rear surface plate 24, and the air flows into the rear space 47. The air which flows into the rear space 47 flows out from the side of the rear surface plate 24. Particulate matter which flows into the front space 46 together with air is charged mainly by discharge of the thorn electrode 56, and adheres mainly to the front surface plate 14 and the rear surface plate 24.

As described above, the flowing direction of most of air which flows into the front space 46 from the side of the front surface plate 14 is changed by the rear surface plate 24, and air from the front space 46 and air from the front space 48 collide against each other in the rear space 47 to generate turbulent flow. Therefore, particulate matter in the air is prone to be charged, and easily adheres to the front surface plate 14 and the rear surface plates 24 and 25, and high dust collecting effect can be obtained.

Although air flows from the side of the front surface plate 14 in the above explanation, the same effect can be obtained even if air flows from the sides of the rear surface plates 24 and 25.

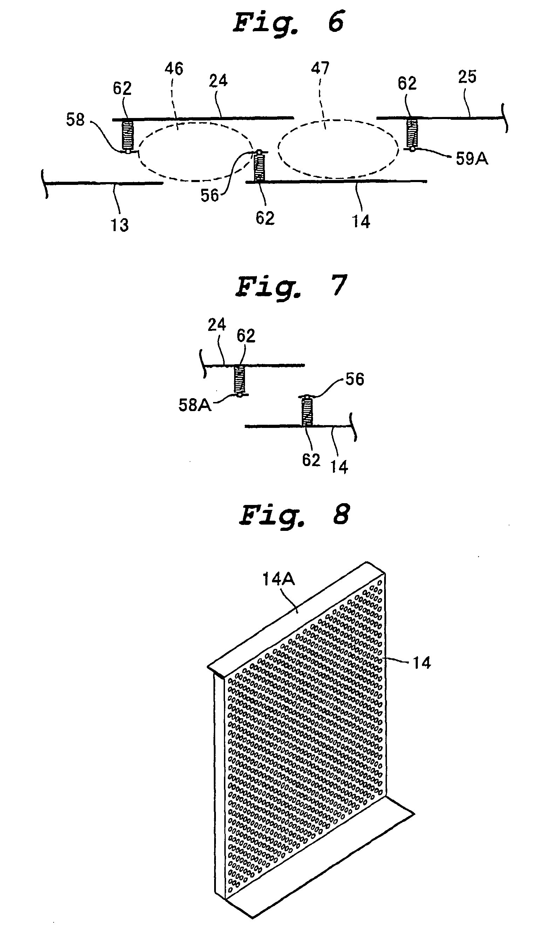

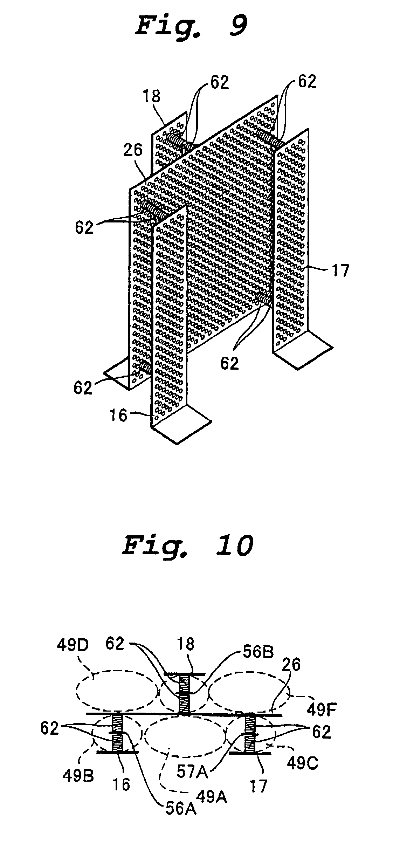

Next, Figs. 6 and 7 show a roadside dust collecting apparatus of another embodiment of the present invention. Fig. 6 is a plan view of the essential portion of the roadside dust collecting apparatus according to this embodiment.

The roadside dust collecting apparatus of the embodiment shown in Fig. 6 is provided at its one of surfaces with a plurality of front surface plates 13 and 14 disposed at established intervals, and at the other surface with a plurality of rear surface plates 24 and 25 at established intervals. The front surface plates 13 and 14 and the rear surface plates 24 and 25 are disposed at established intervals from each other. The front surface plate 14 is disposed between the rear surface plate 24 and the rear surface plate 25 such that their ends are superposed on each other. The front surface plates 13 and 14 and the rear surface plates 24 and 25 are punching plates having a large number of holes or meshes. An opening rate of each of the front surface plates 13 and 14 and the rear surface plates 24 and 25 is about 40%, and a preferable opening rate is 30 to 50%. It is preferable that the front surface plates 13 and 14, and the rear surface plates 24 and 25 have the same widths.

A front space 46 is formed on the rear surface plate 24 on the side of the front surface plates 13 and 14, and a rear space 47 is formed on the front surface plate 14 on the side of the rear surface plates 24 and 25.

As shown in the drawing, an air inflow surface of the front space 46 of the rear surface plate 24 is opened from one surface on which the front surface plates 13 and 14 are disposed. An air outflow surface of the rear space 47 of the front surface plate 14 is opened from the other surface on which the rear surface plates 24 and 25 are disposed.

A thorn electrode 56 is provided on a surface of a side of the front surface plate 14 on the side of the rear surface plate 24. A thorn electrode 58 is provided on a surface of a side of the rear surface plate 24 on the side of the front surface plate 13. A thorn electrode 59A is provided on a surface of a side of the rear surface plate 25 on the side of the front surface plate 14. These thorn electrodes 56, 58 and 59A are respectively provided on the front surface plate 14 and the rear surface plates 24 and 25 by insulators 62.

It is preferable that the thorn electrodes 56, 58 and 59A are disposed on intermediate surfaces between a plane determined by the front surface plates 13 and 14 and a plane determined by the rear surface plates 24 and 25.

Tungsten wires, coil springs or wire brushes may be used as discharge portions instead of the thorn electrodes 56, 58 and 59A. A plurality of ring-like outer teeth washers or cylindrical insert nuts may be connected to one another in the same direction as the thorn electrodes to form discharge portions.

It is preferable that only opposite ends of the front surface plates 13 and 14 opposed to the thorn electrodes 56, 58 and 59A are formed with a large number of holes, and central portions thereof are closed. It is also preferable that only opposite ends of the rear surface plates 24 and 25 opposed to the thorn electrodes 56, 58 and 59A are formed with a large number of holes, and central portions thereof are closed. The front surface plates 13 and 14 and the rear surface plates 24 and 25 may be plates having no holes.

According to this embodiment, the thorn electrodes 56, 58 and 59A are provided on one sides of the front surface plate 14 and the rear surface plates 24 and 25. Therefore, the front surface plate 14 and the rear surface plates 24 and 25 can be formed as common members.

Fig. 7 is a plan view of an essential portion of the roadside dust collecting apparatus of the embodiment. Fig. 7 only shows the essential portion shown in Fig 6.

In this embodiment, the rear surface plate 24 is provided with a thorn electrode 58A in addition to the thorn electrode 58. The rear surface plate 25 and the front surface plate 14 are also provided at their opposite sides with thorn electrodes (not shown). It is preferable that the thorn electrode 58A is disposed on an intermediate surface between a plane determined by the front surface plate 14 and a plane determined by the rear surface plate 24.

The front surface plate 14 and the rear surface plate 24 are provided with the plurality of thorn electrodes in this manner, and thus the charging effect of particulate matter can be enhanced, and this is especially effective when a distance between the front surface plate 14 and the rear surface plate 25 is long.

Fig. 8 is a plan view of the essential portion of a roadside dust collecting apparatus according to another embodiment of the invention.

Fig. 8 shows another structure of the above-descried front surface plate 14, and the front surface plate 14 is provided at its upper end with a top 14A extending toward the rear surface plate.

According to this embodiment, it is possible to bring the rear space formed behind the front surface plate 14 close to the closed space, the dust collecting effect of particulate matter can be enhanced, and the safety is enhanced by the effect of partition wall with respect to the thorn electrode.

Although the front surface plate 14 is shown in the embodiment, it is preferable that the rear surface plate also has the same structure.

Next, Figs. 9 and 10 show a roadside dust collecting apparatus of another embodiment. Fig. 9 is a plan view of the essential portion of the roadside dust collecting apparatus according to the embodiment. Fig. 10 is a plan view of the essential portion of the roadside dust collecting apparatus.

In the roadside dust collecting apparatus of the embodiment, front surface plates 16 and 17 are disposed on opposite sides of one of surfaces of the rear surface plate 26, and a front surface plate 18 is disposed on a substantially central portion of the other surface. The front surface plates 16, 17 and 18 and the rear surface plate 26 are disposed at established intervals from each other. The front surface plates 16, 17 and 18 and the rear surface plate 26 are punching plates having a large number of holes or meshes. An opening rate of each of the front surface plates 16, 17 and 18 and the rear surface plate 26 is about 40%, and a preferable opening rate is 30 to 50%. It is preferable that the front surface plates 16 and 17 have the same widths.

A front space 49A is formed on the side of the front surface plates 16 and 17 of the rear surface plate 26. A rear space 49B is formed on the side of the rear surface plate 26 of the front surface plate 16. A rear space 49C is formed on the side of the rear surface plate 26 of the front surface plate 17. A front space 49D and a front space 49F are formed on the side of the front surface plate 18 of the rear surface plate 26. A rear space 49E is formed on the side of the rear surface plate 26 of the front surface plate 18.

As shown in the drawing, an air inflow surface of the front space 49A of the rear surface plate 26 is opened from a surface on which the front surface plates 16 and 17 are disposed. Air inflow surfaces of the front spaces 49D and 49F of the rear surface plate 26 are opened from a surface on which the front surface plate 18 is disposed.

A thorn electrode 56A is provided between the front surface plate 16 and the rear surface plate 26. A thorn electrode 57A is provided between the front surface plate 17 and the rear surface plate 26. A thorn electrode 56B is provided between the front surface plate 18 and the rear surface plate 26. These thorn electrodes 56A, 57A and 56B are provided between the front surface plates 16, 17 and 18 and the rear surface plate 26 by insulators 62.

Although only one rear surface plate 26 having the front surface plates 16, 17 and 18 is illustrated in the embodiment, if a plurality of rear surface plates 26 having the same structure are provided, the dust collecting effect can be enhanced.

In this embodiment also, the entire surface or a portion of the surface of the rear surface plate 26, or the front surface plates 16, 17 and 18 may be plate having no holes.

Next, the dust collecting operation of the roadside dust collecting apparatus of the embodiment will be explained.

For example, the flowing direction of a portion of air flowing into the front space 49A from a side of the front surface plate 16 by natural wind or running wind of a vehicle is changed into the widthwise direction by the rear surface plate 26, and the air flows into the rear spaces 49B and 49C. A portion of air flowing into the rear space 49B flows out from the punching holes of the rear surface plate 26. Particulate matter which flows into the front space 49A together with air is charged by discharge of the thorn electrodes 56A and 57A, and adheres mainly to the front surface plates 16 and 17 and the rear surface plate 26. Particulate matter which flows into the rear spaces 49B and 49C through punching holes of the front surface plates 16 and 17 is charged by the thorn electrode 56A and the thorn electrode 57A in the rear spaces 49B and 49C and adheres to the front surface plates 16 and 17 and the rear surface plate 26 which form the rear spaces 49B and 49C. Particulate matter in the air which passed through the rear surface plate 26 is charged by the thorn electrode 56B and adheres to the rear surface plate 26 and the front surface plate 18.

Although air flows from the front surface plates 16 and 17 in the above explanation, the same effect can be obtained even with air flow from the front surface plate 18.

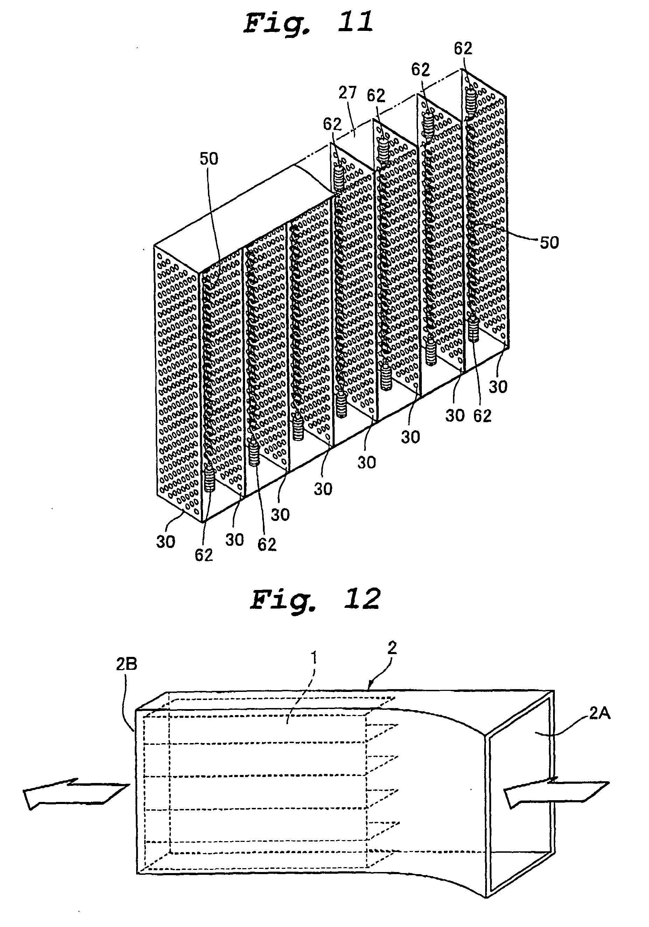

Next, Fig. 11 shows a roadside dust collecting apparatus of another embodiment of the present invention. Fig. 11 is a plan view of the essential portion of the roadside dust collecting apparatus according to this embodiment.

In the roadside dust collecting apparatus of the embodiment, a plurality of side surface plates 30 stand on one of surfaces of a rear surface plate 27 at established intervals. The side surface plates 30 are provided in a direction perpendicular to the rear surface plate 27. The side surface plates 30 are punching plates having a large number of holes or meshes. The rear surface plate 27 may also be a punching plate having a large number of holes or a mesh. An opening rate of each of the side surface plates 30 is about 40%, and a preferable opening rate is 30 to 50%. It is preferable that a distance between adjacent side surface plates 30 is the same as the width of the side surface plate 30.

Dischargers 50 are provided between adjacent side surface plates 30. The discharger 50 is located at a position away from the adjacent side surface plates 30 and the rear surface plate 27 by equal distances. The discharger 50 comprises a coil spring, and is connected to a high voltage power supply (not shown). Each discharger 50 is provided at its upper and lower ends with insulators 62.

A merely discharge line may be used instead of the coil spring as the discharger 50. A plurality of ring-like outer teeth washers or cylindrical insert nuts may be connected to one another as the thorn electrodes to form discharger. Further, a thorn electrode whose opposite sides are of sawtooth shape may be used.

The rear surface plate 27 and the side surface plate 30 are ground electrodes, and also function as dust collecting surfaces. If the surfaces of the rear surface plate 27 and the side surface plate 30 are provided with dust collecting material having insulative properties and air permeability, e.g., insulative fiber, meshes made of ceramic fiber or ceramic foam, the dust collecting efficiency is enhanced.

Next, the dust collecting operation of the roadside dust collecting apparatus of the embodiment will be explained.

For example, air flows between the rear surface plate 27 and the side surface plate 30 by natural wind or running wind of a vehicle. Particulate matter which flows between the rear surface plate 27 and the side surface plate 30 together with air is charged by discharge of the dischargers 50, and adheres to the rear surface plate 27 and the side surface plate 30.

Fig. 12 is a perspective view of the essential portion showing a using state of the roadside dust collecting apparatus shown in Fig. 11. In Fig. 12, it is preferable that insulators 62 in Fig. 11 are mounted on the rear surface plate 27 or the side surface plate 30, and upper and lower end surfaces at which upper and lower ends of the discharger 50 are located are opened.

According to the roadside dust collecting apparatus of the embodiment, an apparatus body 1 is accommodated in a ventilation case 2. One end opening 2A of the ventilation case 2 is greater than the other end opening 2B. A predetermined length from the enlarged one end opening 2A ia gradually narrowed toward the other end. The apparatus body 1 has the side surface plate extending in a direction parallel to the ventilation passage.

According to the embodiment, air which flows from the one end opening 2A by natural wind or running wind of a vehicle is charged by discharger when the air passes between side surface plates, and is collected by the side surface plate or rear surface plate.

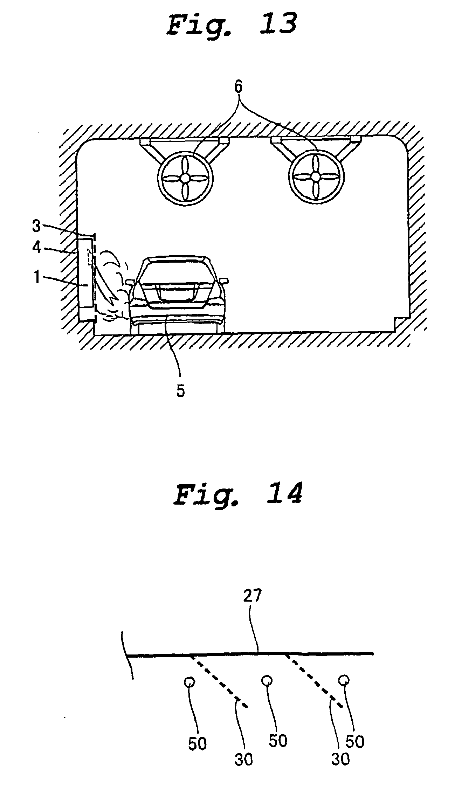

Fig. 13 is a sectional view in a tunnel showing a using state of the roadside dust collecting apparatus shown in Fig. 11. In Fig. 13 also, it is preferable that the insulators 62 are mounted on the rear surface plate 27 or the side surface plate 30, and upper and lower end surfaces at upper and lower ends of the discharger 50 are located are opened.

According to the roadside dust collecting apparatus of the embodiment, the apparatus body 1 as shown in Fig. 11 is accommodated between a protection fence 3 and a tunnel wall surface 4. The roadside dust collecting apparatus is disposed such that the rear surface plate of the apparatus body 1 comes to the side of the tunnel wall surface. In Fig. 13, the roadside dust collecting apparatus is disposed such that the side surface plate is directed in the vertical direction. If the roadside dust collecting apparatus is disposed such that the side surface plate is directed in the vertical direction as in this embodiment, particulate matter discharged from a vehicle 5 can be collected utilizing flow of air rising along the tunnel wall surface 4. The tunnel wall surface 4 is provided at its ceiling with a jet fan 6, and ventilation in the tunnel is carried out such that air flows in one direction in the tunnel.

The apparatus body 1 as shown in Fig. 12 may be disposed such that a front side thereof in the moving direction is on the side of the other end opening 2B.

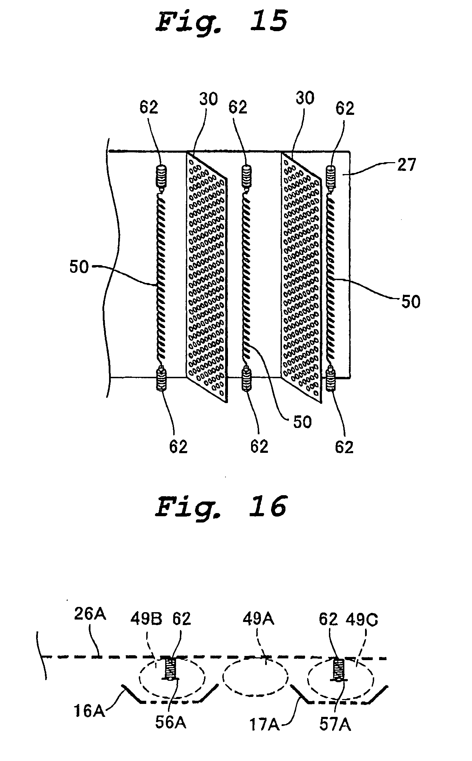

Next, Figs. 14 and 15 show a roadside dust collecting apparatus of another embodiment. Fig. 14 is a plan view of the essential portion of a roadside dust collecting apparatus according to this embodiment, and Fig. 15 is a perspective view of the essential portion of the roadside dust collecting apparatus.

In the roadside dust collecting apparatus of the embodiment, a plurality of side surface plates 30 stand on one of surfaces of a rear surface plate 27 at established intervals. The side surface plates 30 are provided in a direction perpendicular to the rear surface plate 27 such that the side surface plates 30 are inclined through a predetermined angle. The side surface plates 30 are punching plates having a large number of holes or meshes. The rear surface plate 27 may also be a punching plate having a large number of holes or a mesh. An opening rate of the punching plate is about 40%, and a preferable opening rate is 30 to 50%. It is preferable that a distance between adjacent side surface plates 30 is the same as the width of the side surface plate 30.

Dischargers 50 are provided between adjacent side surface plates 30. The discharger 50 is located at a position away from the adjacent side surface plates 30 and the rear surface plate 27 by equal distances. The discharger 50 comprises a coil spring, and is connected to a high voltage power supply (not shown). Each discharger 50 is provided at its upper and lower ends with insulators 62.

A merely discharge line may be used instead of the coil spring as the discharger 50. A plurality of ring-like outer teeth washers or cylindrical insert nuts may be connected to one another as the thorn electrodes to form discharger. Further, a thorn electrode whose opposite sides are of sawtooth shape may be used.

The rear surface plate 27 and the side surface plate 30 are ground electrodes, and also function as dust collecting surfaces. If the surfaces of the rear surface plate 27 and the side surface plate 30 are provided with dust collecting material having insulative properties and air permeability, e.g., insulative fiber, meshes made of ceramic fiber or ceramic foam, the dust collecting efficiency is enhanced.

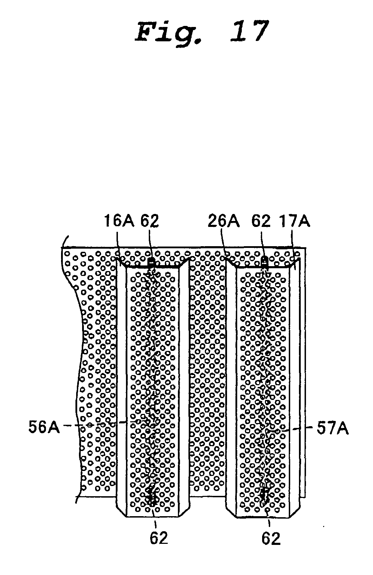

Next, Figs. 16 and 17 show a roadside dust collecting apparatus of another embodiment of the present invention. Fig. 16 is a plan view of the essential portion of the roadside dust collecting apparatus according to this embodiment, and Fig. 17 is a perspective view of the essential portion of the roadside dust collecting apparatus.

In the roadside dust collecting apparatus of the embodiment, front surface plates 16A and 17A are disposed on one of surfaces of a rear surface plate 26A. Opposite sides of each of the front surface plates 16A and 17A are bent through predetermined angle toward the rear surface plate 26A. The front surface plates 16A and 17A and the rear surface plate 26A are disposed at established intervals. The front surface plates 16A and 17A and the rear surface plate 26A are punching plates having a large number of holes or meshes. An opening rate of each of the front surface plates 16A and 17A and the rear surface plate 26A is about 40%, and a preferable opening rate is 30 to 50%. It is preferable that front surface plates 16A and 17A have the same widths.

A front space 49A is formed on rear surface plate 26A on the side of the front surface plates 16A and 17A. A rear space 49B is formed on the front surface plate 16A on the side of the rear surface plate 26A. A rear space 49C is formed on the front surface plate 17A on the side of the rear surface plate 26A.

As shown in the drawing, an air inflow surface of the front space 49A of the rear surface plate 26A is opened from a surface on which the front surface plates 16A and 17A are disposed.

A thorn electrode 56A is provided between the front surface plate 16A and the rear surface plate 26A. A thorn electrode 57A is provided between the front surface plate 17A and the rear surface plate 26A. These thorn electrodes 56A and 57A are provided on the rear surface plate 26A by insulators 62.

Next, the dust collecting operation of the roadside dust collecting apparatus of the embodiment will be explained.

For example, the flowing direction of a portion of air flowing into the front space 49A from a side of the front surface plate 16A by natural wind or running wind of a vehicle is changed into the widthwise direction by the rear surface plate 26A, and the air flows into the rear spaces 49B and 49C. A portion of air flowing into the rear space 49B flows out from the punching holes of the rear surface plate 26A. Particulate matter which flows into the front space 49A together with air is charged by discharge of the thorn electrodes 56A and 57A, and adheres mainly to the front surface plates 16A and 17A and the rear surface plate 26A. Particulate matter which flows into the rear spaces 49B and 49C through punching holes of the front surface plates 16A and 17A is charged by the thorn electrode 56A and the thorn electrode 57A in the rear spaces 49B and 49C and adheres to the front surface plates 16A and 17A and the rear surface plate 26A which form the rear spaces 49B and 49C.

Opposite sides of each of the front surface plates 16A and 17A are bent through predetermined angle toward the rear surface plate 26A. Therefore, it is possible to prevent foreign matter from being mixed in the thorn electrodes 56A and 57A, and to enhance the safety.

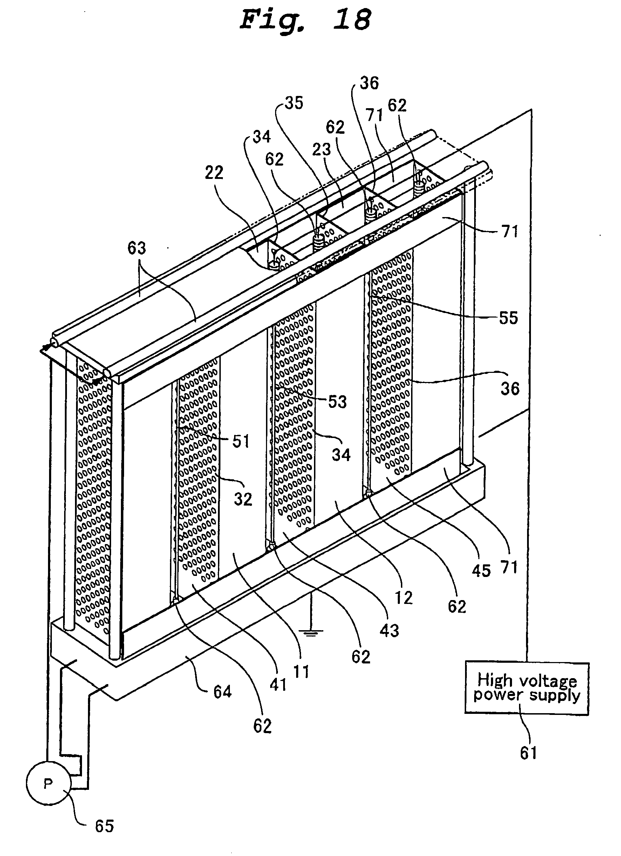

Next, Fig. 18 shows a roadside dust collecting apparatus of another embodiment of the present invention. Fig. 18 is a plan view of the essential portion of the roadside dust collecting apparatus according to this embodiment.

The roadside dust collecting apparatus of this embodiment has shielding members 71 shown in Fig. 1. The already explained structure is designated with the same number, and explanation thereof will be omitted.

Upper and lower ends of front surface plates 11 and 12, and upper and lower ends of rear surface plates 21, 22 and 23 are provided with the shielding members 71 such as to cover the insulators 62.

According to this embodiment, air flow can be restricted at the locations of the insulators 62 where discharge is not generated. Thus, it is possible to prevent particulate matter which is not charged from passing in the vicinity of the insulator 62, and to enhance the dust collecting effect.

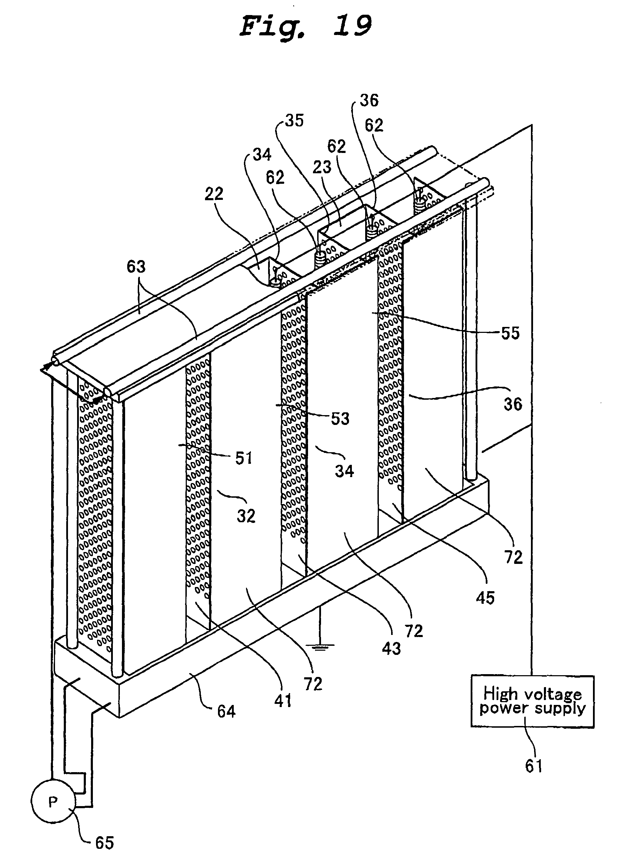

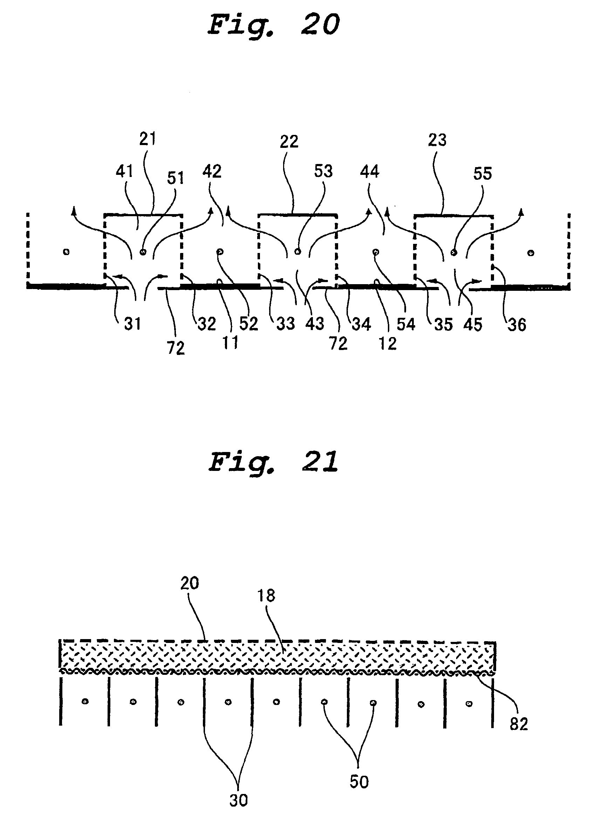

Next, Figs. 19 and 20 show a roadside dust collecting apparatus of another embodiment of the present invention. Fig. 19 is a plan view of the essential portion of a roadside dust collecting apparatus according to this embodiment. Fig. 20 is a plan view of the essential portion of the roadside dust collecting apparatus.

The roadside dust collecting apparatus of this embodiment has shielding members 72 shown in Fig. 1. The already explained structure is designated with the same number, and explanation thereof will be omitted.

The shielding member 72 is wider than the front surface plates 11 and 12, and the front surface plates 11 and 12 are provided with the shielding members 72 such as to cover opposite sides of front spaces 41, 43 and 45.

According to this embodiment, since the openings of the front spaces 41, 43 and 45 are narrowed by the shielding members 72, air flowing into the front spaces 41, 43 and 45 spreads in the widthwise direction after the air passes through the openings of the front spaces 41, 43 and 45. That is, since flow of air which flows into the front spaces 41, 43 and 45 can be disturbed, the staying time of the particulate matter in the discharge space becomes long and thus, the charging effect can be enhanced.

Although water flows in some of the embodiments, it is preferable that water flows also in other embodiments also.

When water is allowed to flow, it is preferable that rain water is accumulated and utilized.

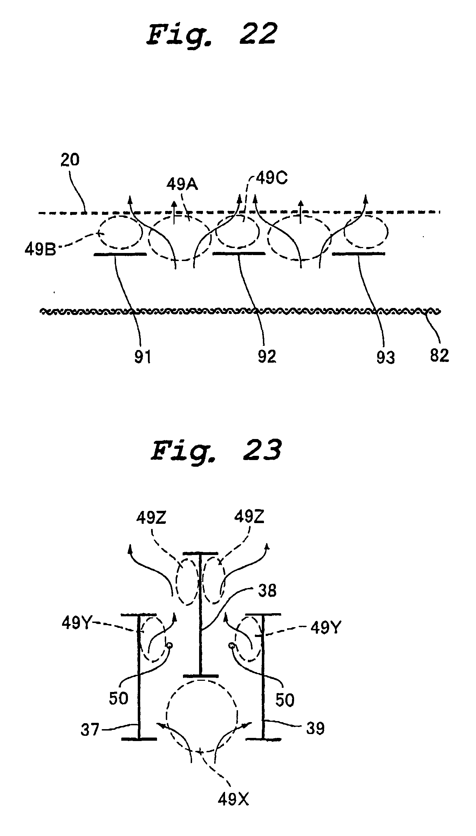

Next, Fig. 21 shows a roadside dust collecting apparatus of another embodiment of the present invention. Fig. 21 is a plan view of an essential portion of the roadside dust collecting apparatus according to the embodiment.

According to the roadside dust collecting apparatus of this embodiment, a rear surface plate 20 is provided at its one of surfaces with a plurality of side surface plates 30 arranged at established intervals from one another, and dischargers 50 are provided between the side surface plates 30. The side surface plate 30 is inclined with respect to the rear surface plate 20 through a predetermined angle (perpendicularly in the drawing). A filter material 81 made of nonwoven fabric of synthetic fiber is provided in a space between the rear surface plate 20 and the side surface plate 30. The filter material 81 is held by the rear surface plate 20 and the mesh 82. The rear surface plate 20 is a punching plate having a large number of holes or a mesh. The side surface plate 30 may also be a punching plate having a large number of holes or a mesh.

In the embodiment, the side surface plate 30 functions as a grounding portion and a dust collecting portion, but the rear surface plate 20, the filter material 81 and the mesh 82 also function as the dust collecting portions. The rear surface plate 20 may function as the grounding portion.

Next, Fig. 22 shows a roadside dust collecting apparatus of another embodiment. Fig. 22 is a plan view of an essential portion of a roadside dust collecting apparatus according to this embodiment.

According to the roadside dust collecting apparatus of this embodiment, a rear surface plate 20 is provided at its one of surfaces with a plurality of plate-like dischargers 91, 92 and 93 at established intervals from one another. The dischargers 91, 92 and 93 are provided in a direction substantially parallel to the rear surface plate 20. A protection mesh 82 is provided in front of the dischargers 91, 92 and 93. The rear surface plate 20 is a punching plate having a large number of holes or a mesh. The side surface plate 30 may also be a punching plate having a large number of holes or a mesh.

In this embodiment, a front space 49A is formed on the side of the dischargers 91 and 92 of the rear surface plate 20, a rear space 49B is formed on the side of the rear surface plate 20 of the discharger 91, and a rear space 49C is formed on the side of the rear surface plate 20 of the discharger 92. As shown in the drawing, an air inflow surface of the front space 49A of the rear surface plate 20 is opened from a surface on which the dischargers 91 and 92 are disposed.

In this embodiment, the dischargers 91, 92 and 93 function as the front surface plates, and the rear surface plate 20 functions as the grounding portion and the dust collecting portion.

Next, the dust collecting operation of the roadside dust collecting apparatus of the embodiment will be explained.

For example, the flowing direction of a portion of air flowing into the front space 49A from a side of the discharger 92 by natural wind or running wind of a vehicle is changed into the widthwise direction by the rear surface plate 20, and the air flows into the rear spaces 49B and 49C. A portion of air flowing into the rear space 49B flows out from the punching holes of the rear surface plate 20. Particulate matter which flows into the front space 49A together with air is charged by discharge of the dischargers 91 and 92, and adheres mainly to the rear surface plate 20.

Next, Fig. 23 shows a roadside dust collecting apparatus of another embodiment of the present invention. Fig. 23 is a plan view of an essential portion of the roadside dust collecting apparatus according to this embodiment.

According to the roadside dust collecting apparatus of the embodiment, a plurality of side surface plates 37, 38 and 39 are arranged substantially in parallel at established intervals from one another. Each of the side surface plates has H-shaped cross section. Dischargers 50 are provided between the side surface plates 37, 38 and 39. The side surface plates 37, 38 and 39 are deviated from one another in a longitudinal direction.

A front space 49X is formed in front of a front end of the side surface plate 38, rear spaces 49Y on the side of the dischargers 50 of rear ends of the side surface plates 37 and 39, and rear spaces 49Z are formed on the side of the dischargers 50 of the rear end of the side surface plate 38. As shown in the drawing, an air inflow surface of the front space 49X is opened from the surface on which front ends of the side surface plates 37 and 39 are disposed.

In this embodiment, front ends and rear ends of the side surface plates 37, 38 and 39 function as the front surface plate or rear surface plate, and the side surface plates 37, 38 and 39 function as the grounding portions and dust collecting portions.

Next, the dust collecting operation of the roadside dust collecting apparatus of the embodiment will be explained.

For example, the flowing direction of a portion of air flowing into the front space 49X from sides of the side surface plates 37 and 39 by natural wind or running wind of a vehicle is changed into the widthwise direction by the front end of the side surface plate 38, and the air flow into the rear spaces 49Y. A portion of the air flowing into the rear space 49Y flows out toward the rear end of the side surface plate 38 through the rear space 49Z formed by the rear end of the side surface plate 38. Particulate matter which flows into the front space 49X together with air is charged by discharge of the discharger 50, and adheres to the side surface plates 37, 38 and 39.

In this embodiment, the space 49Y formed by the rear ends of the side surface plates 37 and 39 is a rear space, but the space 49Y functions as a front space with respect to the rear space 49Z formed by the rear end of the side surface plate 38.

In the above embodiments, the front surface plate, the rear surface plate or the side surface plate is used as the dust collecting portion, but other object such as a wall surface in the tunnel or soundproofing wall may be used especially instead of the rear surface plate.

In the above embodiments, it is not always necessary that the front surface plate, the rear surface plate or the side surface plate explained concerning the punching plate are provided at its entire surface with the large number of holes, and may partially be provided with holes. In that case, the opening rate of that portion having holes per unit area of thereof is about 40%, and a preferable opening rate is 30 to 50%.

The present embodiment has been explained as the roadside dust collecting apparatus, but the dust collecting apparatus may be disposed outdoor or underground park, or indoor such as reception room or corridor of a hospital or airport.

According to the present invention, it is possible to efficiently remove contaminant discharged from a vehicle utilizing natural wind or running wind of a vehicle without forcibly blowing air using a blower.

### Industrial Applicability

According to the present invention, it is possible to efficiently remove contaminant discharged from a vehicle utilizing natural wind or running wind of a vehicle without forcibly blowing air using a blower. The roadside dust collecting apparatus of the invention may be disposed outdoor or underground park, or indoor such as reception room or corridor of a hospital or airport.

## Claims

1. A roadside dust collecting apparatus in which electricity is discharged between a discharger and a grounding portion, particulate matter in air is charged, thereby allowing the particulate matter to adhere to a dust collecting portion, wherein said roadside dust collecting apparatus includes a front surface plate and a rear surface plate as the dust collecting portion, said front surface plate and said rear surface plate are disposed at an established interval from each other, air which flowed into a front space of said rear surface plate from side of said front surface plate by natural wind or running wind of a vehicle is introduced into a rear space of said front surface plate by said rear surface plate and then, the air in said rear space is allowed to flow out from a side of said rear surface plate.

2. The roadside dust collecting apparatus according to claim 1, wherein a side surface plate for dividing said front space and said rear space from each other is provided as said dust collecting portion, at least a portion of said side surface plate is provided with a large number of holes.

3. The roadside dust collecting apparatus according to claim 1, wherein said discharger is provided in said front space or said rear space, said front surface plate or said rear surface plate is said grounding portion.

4. The roadside dust collecting apparatus according to claim 2, wherein said front surface plate and said side surface plate, or said rear surface plate and said side surface plate are said grounding portions.

5. The roadside dust collecting apparatus according to claim 2, wherein a width of said side surface plate is 0.3 to 3 times of a width of said front surface plate or said rear surface plate.

6. The roadside dust collecting apparatus according to claim 1, wherein there exist two or more front surface plates and two or more rear surface plates, said front spaces and said rear spaces are disposed alternately.

7. The roadside dust collecting apparatus according to claim 1, wherein a portion of an air inflow surface of said front space is provided with a shielding member for air current.

8. The roadside dust collecting apparatus according to claim 1, wherein water is allowed to flow through said front surface plate or said rear surface plate.

9. The roadside dust collecting apparatus according to claim 2, wherein water is allowed to flow through said side surface plate.

10. The roadside dust collecting apparatus according to claim 8, wherein said roadside dust collecting apparatus is provided at its bottom with a water receiver, water in said water receiver is allowed to flow through said front surface plate or said rear surface plate.

11. The roadside dust collecting apparatus according to claim 9, wherein said roadside dust collecting apparatus is provided at its bottom with a water receiver, water in said water receiver is allowed to flow through said side surface plate.

12. A roadside dust collecting apparatus wherein said roadside dust collecting apparatus includes a front surface plate and a rear surface plate as the dust collecting portion, said front surface plate and said rear surface plate are disposed at an established interval from each other, air which flowed into a front space of said rear surface plate from side of said front surface plate by natural wind or running wind of a vehicle is introduced into a rear space of said front surface plate by said rear surface plate and then, the air in the rear space is allowed to flow out from a large number of holes provided in said rear surface plate.

13. A roadside dust collecting apparatus wherein a rear surface plate and a plurality of side surface plates are provided as said dust collecting portion, said side surface plates are disposed, said discharger is disposed between said side surface plates, air is introduced between said rear surface plate and said side surface plate by natural wind or running wind of a vehicle.

14. The roadside dust collecting apparatus according to claim 12 or 13, wherein at least a portion of said side surface plate and at least a portion of said rear surface plate are provided with a large number of holes.

15. The roadside dust collecting apparatus according to any one of claims 1 to 12, wherein at least a portion of said front surface plate and at least a portion of said rear surface plate are provided with a large number of holes.

16. The roadside dust collecting apparatus according to any one of claims 1 to 13, wherein said roadside dust collecting apparatus is disposed between a roadway and a sidewalk such that said rear surface plate comes on the side of said sidewalk.

17. The roadside dust collecting apparatus according to any one of claims 1 to 13, wherein said roadside dust collecting apparatus is disposed in a tunnel such that said rear surface plate comes on the side of a wall surface of said tunnel.
